# EUROPEAN PATENT APPLICATION

(11) **EP 0 980 747 A2**
(43) Date of publication of application: **23.02.2000**
(21) Application number: 99250275.7
(22) Date of filing: 16.08.1999
(51) Int. Cl.: B29C 59/02, B05C 17/02

(54) **Method and apparatus for forming a decorative pattern in a liquid coating applicator**

(30) Priority: 14.08.1998 US 134554
(71) Applicant: NEWELL OPERATING COMPANY, Freeport Illinois 61032 (US)
(72) Inventor: Case, Terrance M., Milwaukee, Wisconsin 53207 (US); LeClaire, John W., Brookfield, Wisconsin 53005 (US); Polzin, Bruce, Greendale, Wisconsin 53129 (US); Bower, Lawrence J., Milwaukee, Wisconsin 53207 (US)
(74) Representative: UEXKÜLL & STOLBERG

(57) **Abstract**

A method for forming a decorative surface in a liquid coating applicator includes the steps of providing a surface having a plurality of elevated portions located so as to form a pattern on the surface, treating the elevated portions of the surface and applying the elevated portions against a liquid coating applicating medium of a liquid coating applicator so as to form a corresponding image in the liquid coating applicating medium.

## Description

### FIELD OF THE INVENTION

The present invention relates to methods and apparatus for forming decorative patterns on a liquid coating applicating medium of a liquid coating applicator. In particular, the present invention relates to methods and apparatus for creating a pattern of elevated portions on a liquid coating applicating medium of a liquid coating applicator.

### BACKGROUND OF THE INVENTION

In recent years, the popularity of creating decorative or faux finishes on wall surfaces has escalated. Decorative or faux finishes are generally created using various media, such as rags, stippling brushes and sponges which provide uniquely textured surfaces. In addition, paint rollers and pads have also been modified such that the liquid or paint applying medium carried by the roller or pad has a series of raised and lowered portions, such that only the raised portions contact the wall with the paint or other liquid coating to create a repeating pattern as the roller is rolled across the surface or as the pad is pushed or dabbed against the surface. Such decorative patterns are typically formed in the paint applying medium of the railers and pads by cutting or otherwise shearing the medium at selected locations across the surface of the applicator to create the raised and lowered portions. This process of forming decorative patterns in liquid coating applicators is time consuming and expensive.

As a result, there is a continuing need for an improved method and an improved apparatus for forming decorative patterns and liquid coating applicators.

### SUMMARY OF THE INVENTION

The present invention is directed to a method for forming a decorative surface in a liquid coating applicator which includes the steps of providing a surface having a plurality of elevated portions located so as to form a pattern on the surface, treating the elevated portions of the surface and applying the elevated portions against a liquid coating applicating medium of a liquid coating applicator so as to form a corresponding image in the liquid coating applicating medium.

According to one aspect of the first method of the present invention, the step of treating includes heating the elevated portions. The elevated portions are preferably coplanar with one another. Alternatively, the elevated portions circumferentially about an axis.

According to yet another aspect of the first method, the liquid coating applicating medium of the liquid coating applicator has an outer circumferential surface, wherein the step of providing a surface having a plurality of elevated portions includes providing a plurality of members. Each member has an inner circumferential surface having a plurality of elevated portions located so as to form a pattern on the inner circumferential surface. The step of applying the elevated portions includes positioning each of the plurality of members about and in contact with the outer circumferential surface of the liquid coating applicating medium so as to form a corresponding image in the liquid coating applicating medium. Preferably, the step of providing a surface includes providing at least four members.

According to yet another aspect of the first method, the liquid coating applicating medium comprises a nap of material circumferentially extending about a cylindrical core. The step of applying the elevated portions includes rotating the cylindrical core as the core and the elevated portions are linearly moved relative to one another. Preferably, the liquid coating applicating medium comprises a thermoplastic material and wherein the step of treating the elevated portions of the surface includes heating the elevated portions to a temperature sufficient so as to shrink down the thermoplastic material in contact with the elevated portions. Preferably, the elevated portions are heated to a temperature from between about 515 degrees to about 525 degrees fahrenheit.

The present invention is also directed to a second method for forming a decorative surface in a liquid coating applicator wherein the method includes the steps of providing a substrate, selectively forming an adhesive on a plurality of portions of the substrate to form a pattern and depositing liquid applying medium particles to the substrate, wherein the liquid applying medium particles bond only to the formed adhesive.

According to one aspect of the second method, the step of selectively forming an adhesive includes selectively applying an adhesive to the substrate. According to yet another aspect of the present invention, the substrate includes a layer of thermoplastic material, wherein the step of depositing adhesive includes selectively melting a plurality of portions of the layer of thermoplastic material on the substrate.

According to yet another aspect of the second method, the step of applying liquid applying mediums to the core includes creating an electrostatically charged field at least partially about the substrate and exposing flocking material to the substrate within the electrostatically charged field.

The present invention is also directed to an apparatus for forming a decorative pattern on an outer surface of a roller cover having a hollow cylindrical core ends liquid applying medium circumferentially extending about the core. The apparatus includes a base, a generally planar die coupled to the base having a plurality of elevated portions located so as to form a pattern on the die, means for heating the elevated portions of the die, a carriage movably coupled to the base and along the die, a mandrel rotatably coupled to the carriage and configured for being received within the core to support the roller cover, a rotary actuator supported by the carriage and adapted to rotate the roller cover about an axis of the mandrel and a linear actuator supported by the base and coupled to the carriage. The linear actuator moves the mandrel across the die as the rotary actuator rotates the roller cover.

According to one aspect of the apparatus of the present invention, the rotary actuator is coupled to the mandrel to rotate the mandrel. According to yet another aspect, means for heating comprises an electrical heating element thermally coupled to the elevated portions of the die.

According to yet another aspect of the apparatus of the present invention, the apparatus includes means for controlling the temperature of the die. In the exemplary embodiment, the apparatus includes a heat sensor thermally coupled to the die and a control circuit coupled to the heat sensor. The heat sensor is configured to generate temperature signals representing the temperature of the elevated portions of the die. The control circuit is configured to generate a control signal for controlling the means for heating based upon the temperature signal.

According to yet another aspect of the apparatus of the present invention, the apparatus includes an ejector member coupled to the base and adapted to engage the roller cover on the mandrel. The ejector member moves between a first position in which the ejector member is adapted to engage the roller cover while the roller cover is on the mandrel and a second position in which the ejector member has moved the roller cover off of the mandrel. Preferably, the apparatus includes an actuator coupled to the ejector member for moving the ejector member between the first and second positions.

According to yet another aspect of the apparatus of the present invention, the apparatus includes means for substantially equalizing a rotational velocity of the roller cover and a linear velocity of the carriage as the mandrel is moved across the die. In the exemplary embodiment, the apparatus includes a first sensor configured to generate a first velocity signal representing the velocity of the carriage, a second sensor configured to generate a second velocity signal representing the rotational velocity of the roller cover and a control circuit coupled to the first and second sensors. The control circuit is configured to generate a control signal for controlling the linear actuator and the rotary actuator based upon the first and second velocity signal.

### BRIEF DESCRIPTION OF THE DRAWINGS

FIGURE 1 is a perspective view of a liquid coating applicator having an applying medium prior to the formation of a decorative pattern in the applying medium.
FIGURE 2 is a perspective view of an embossing system of the present invention for creating a decorative patter in the applying medium of FIGURE 1.
FIGURE 3 is a sectional view of the system of FIGURE 2 taken along lines 3--3.
FIGURE 4 is a sectional view of the system of FIGURE 2 taken along lines 4--4 illustrating the formation of a decorative pattern in the applying medium of FIGURE 1.
FIGURE 5 is a perspective view of the liquid coating applicator of FIGURE 1 including the formed decorative pattern.
FIGURE 6 is a top plan view of an exemplary embossing apparatus of the present invention.
FIGURE 7 is a right side elevational view of the embossing apparatus of FIGURE 6.
FIGURE 8 is a left side elevational view of the embossing apparatus of FIGURE 6.
FIGURE 9 is a front elevational view of the embossing apparatus of FIGURE 6.
FIGURE 10 is a sectional view of liquid applying medium being lowered into contact with a die.
FIGURE 11 is a sectional view of the die of FIGURE 10 forming a decorative pattern in a liquid applying medium.
FIGURE 12 is a sectional view of the liquid applying medium being removed from the die.
FIGURE 13 is a sectional view of the liquid applying medium being wrapped about a cylindrical core.
FIGURE 14 is a sectional view of a plurality of die members positioned about a liquid applying medium of a liquid coating applicator for forming a decorative pattern in the liquid applying medium.
FIGURE 15 is a perspective view of liquid applying medium particles being deposited upon adhesive portions selectively formed upon a substrate.
FIGURE 16 is a sectional view illustrating adhesive portions being selectively formed on the substrate.
FIGURE 17 is a sectional view of an alternative method of selectively forming adhesive portions upon the substrate.

### DETAILED DESCRIPTION OF THE PREFERRED EMBODIMENTS

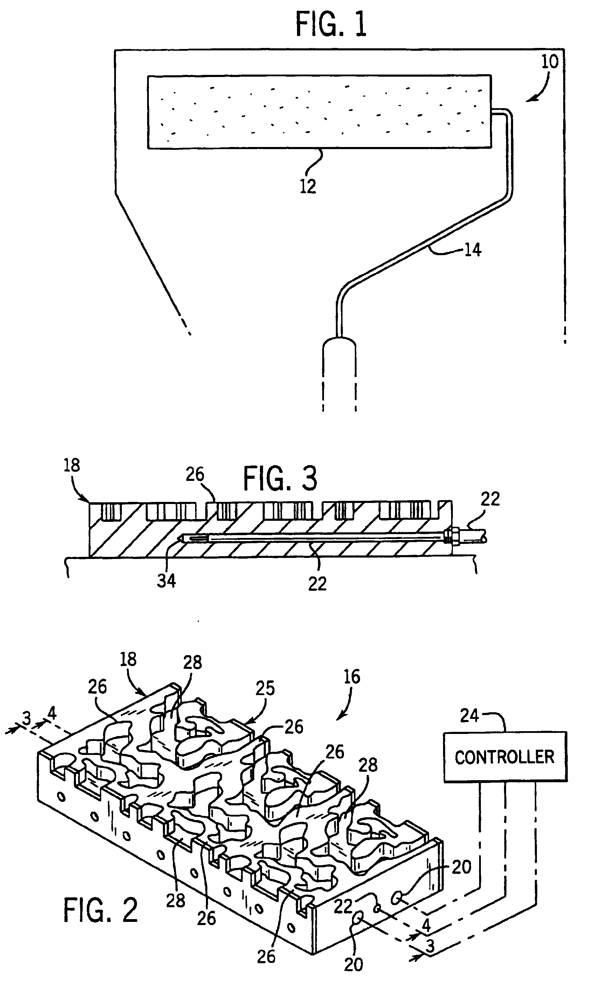

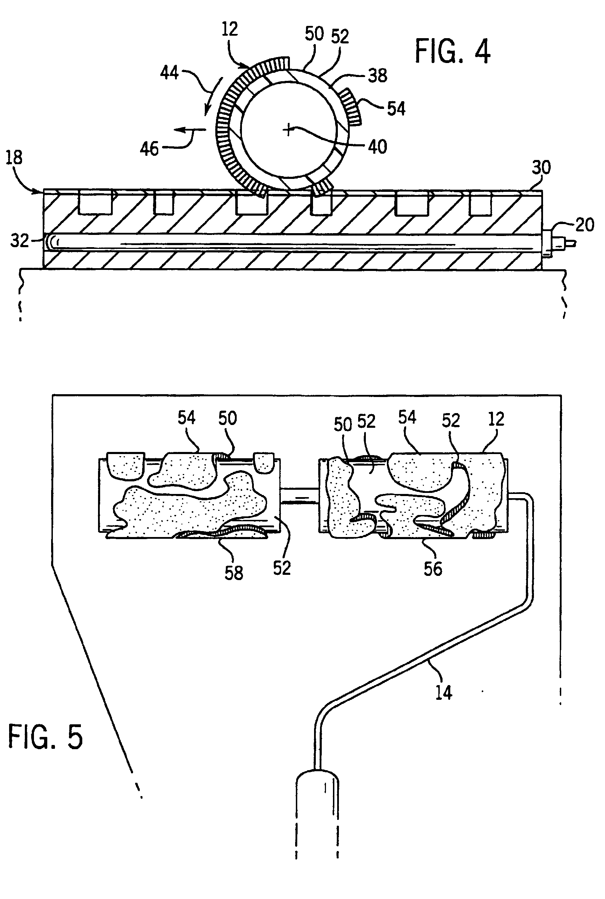

FIGURE 1 is a perspective view of the liquid coning applicator 10 having a liquid applicating or applying medium 12 mounted to a support assembly 14. FIGURES 3-5 illustrate a method utilizing an embossing system 16 to form a decorative pattern as exemplified in the finished liquid coating applicator 10 of FIGURE 5. As best shown by FIGURE 2, system 16 generally includes die 18, heating elements 20, heat sensor 22 and controller 24. Die 18 generally comprises an elongate platen having an upper surface with a plurality of elevated portions 26 raised above and extending about a plurality of sunken portions 28. Elevated portions 26 are positioned across the upper surface 25 of die 18 so as to provide die 18 with a decorative, non-uniform pattern. Alternatively, elevated portion 26 may be arranged across surface 25 so as to provide a repeating or uniform pattern wherein elevated portions 26 are arranged parallel to or are equidistantly spaced from one another. During the formation of the decorative pattern in medium 12 of liquid coating applicator 10, elevated portions 26 contact medium 12 to permanently form a corresponding image or contour in medium 12. For elevated portions 26 to form a corresponding image in medium 12, elevated portions 26 are heated. In particular, elevated portions 26 are heated to a temperature sufficient so as to create corresponding depressions in liquid applying medium 12. In the exemplary method illustrated, medium 12 comprises a material such that upon being exposed to a heated member, the material shrinks down. Medium 12 preferably comprises fibers or filaments of a thermoplastic material, such as acrylic, or a material blended with acrylic fibers. Alternatively, elevated portions 26 may be heated to a temperature sufficient so as to melt or burn those portions of medium 12 which contact elevated portions 26. Furthermore, in lieu of heating elevated portions 26, elevated portions may be chemically treated to shrink down, melt, burn, dissolve or weaken the material comprising medium 12 such that those portions of medium 12 which contact the elevated portions can be easily removed to form the desired depressions.

Elevated portions 26 are preferably heated by heating elements 20. As best shown by FIGURE 4, each heating element 20 comprises a conventionally known, elongate contained electrical heating element, such as a CALROD, mounted within a bore 32 extending through die 18 in thermal contact with die 18. Die 18 preferably comprises a material having a high thermal conductance, such as aluminum, such that heat emitted from heating element 20 is conducted to surface 25 along elevated portions 26. Heating elements 20 are each coupled to and controlled by controller 24 based upon signals received from heat sensor 22.

Heat sensor 22 preferably comprises a conventionally known thermocouple coupled to die 18 so as to sense the temperature of die 18 and the approximate temperature of elevated portions 26. As best shown by FIGURE 3, heat sensor 22 preferably comprises an elongate heat sensing rod fitted into a correspondingly sized bore 34 within die 18 below elevated portions 26. Heat sensor 22 generates temperature signals representing the temperature of elevated portions 26 of die 18. These temperature signals are transmitted to controller 24.

Controller 24 comprises a control circuit configured to generate a control signal for controlling heating elements 20 based upon the received temperature signals from heat sensor 22. Controller 24 may include either an analog control circuit, a digital control circuit or a microprocessor configured or programmed in a conventionally known manner to perform the described operations.

As best shown by FIGURE 4, elevated portions 26 of surface 25 include a layer 30 of a permanent non-stick material. In the exemplary embodiment illustrated, layer 30 preferably comprises a heat resistent grade of polytetraflouroethylene (TEFLON). Layer 30 prevents liquid applying medium 12 from sticking or adhering to surface 25 of elevated portions 26 as elevated portions 26 are brought into actual contact or are brought into close proximity with medium 12 to create the depressions in medium 12. Layer 30 continuously extends across all of surface 25 along elevated portions 26.

FIGURE 4 further illustrates the positioning of elevated portions 26 either against and in contact with liquid applying medium 12 or in sufficient proximity with liquid applying medium 12 such that elevated portions 26 form corresponding depressions in liquid applying medium 12. As shown by FIGURE 4, liquid applying medium 12 circumferentially extends about a hollow cylindrical core 38 centered about an axis 40. As indicated by arrow 44, core 38 and liquid applying medium 12 are rotated about axis 40 as core 38 and medium 12 are linearly translated relative to die 18 as indicated by arrow 46. As will be appreciated, core 38 and medium 12 may be rotated and moved at substantially any orientation across surface 25 of elevated portions 26. Liquid applying medium 12 is preferably pressed against surface 25 of elevated portions 26 such that surface 25 of elevated portions 26 melt down substantial portions of medium 12 to a sufficient depth towards axis 40 such that the outer surface of the depressions formed within medium 12 will not contact or otherwise deposit liquid coatings, such as paint, on the wall or surface as applicator 10 as the roller cover is otherwise moved across the surface when loaded with liquid coating.

In the exemplary embodiment, liquid coating applying medium 12 has a pile height of approximately 0.375 inches. Accordingly, medium 12 has held against elevated portions 26 with a sufficient pressure and for a sufficient period of time so as to enable elevated portions 26 to melt, or structurally weaker medium 12 for the reduction or removal of medium 12 down to the outer circumferential surface of core 38. Because the outer surface 52 of depressions 50 is recessed approximately 0.375 inches from the outer surface of medium 12 which does not contact elevated portions 26, surface 52 at the bottom of each depression 50 will not contact the wall or surface under the normal amount of manual pressure applied by the user to deposit liquid coating or paint against the wall or to smear existing paint on the wall. At the same time, because those portions of medium 12 which have not been contacted by elevated portions 26 have a pile height of only approximately 0.375 inches, those portions of medium 12 are not sufficiently long such that those portions will fold over or bend into depressions 50 upon being pressed against the wall or surface. As a result, the remaining portions of medium 12 create a distinct and relatively sharp image or impression of liquid coating along the wall or surface.

Prior to being positioned against elevated portions 26, medium 12 has a pile height of between about 0.187 inches and about 0.75 inches. Medium 12 preferably is composed of a fine grade of thermoplastic fiber, such as acrylic. Liquid applying medium 12 is preferably comprised of fine grade of an acrylic/modacrylic blend.

As will be appreciated, core 38 and medium 12 may be rotated and linearly translated relative to die 18 in a variety of different fashions. For example, medium 12 and core 38 may be rotated about axis 40 while still rotatably coupled to support 14. Alternatively, medium 12 and core 38 may be rotated about a spindle centered about axis 40 through core 38 or may be rotated with a mandrel non-rotatably secured through core 38. Although core 38 and medium 12 are illustrated as being linearly translated across surface 25 of die 18, die 18 may alternatively be moved relative to medium 12 and core 38.

As best shown by FIGURE 5, medium 12 is positioned against die 18 so as to create depressions 50 and raised portions 54 about substantially the entire circumference of core 38 and along the entire axial length of core 38. In the exemplary embodiment illustrated in FIGURE 5, core 38 and applicating medium 12 are severed to form two individual roller covers 56, 58 which are rotatably supported by support 14. Alternatively, core 38 and medium 12 may be rotatably coupled to support 14 as a single elongate cover. As shown by FIGURE 5, the above method utilizing system 16 creates a series of depressions 50 and raised portions 54 in medium 12 which, when loaded with paint and rolled across a surface, will create a sharp, distinct corresponding image or decorative pattern along the wall or surface.

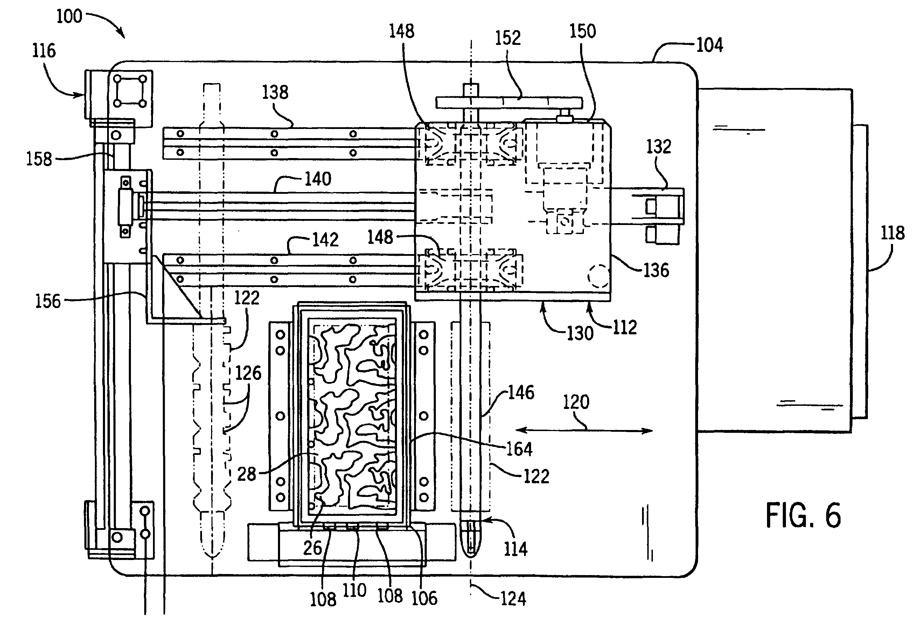

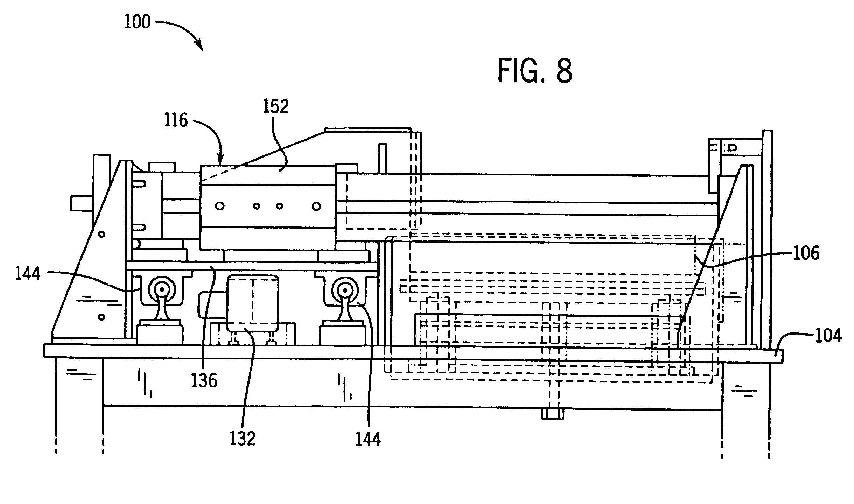

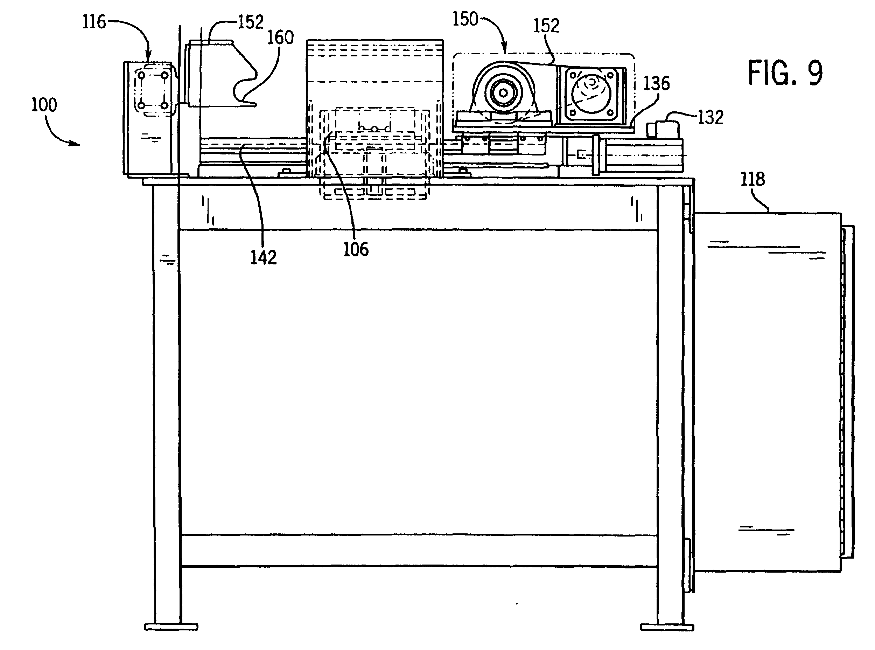

FIGURES 6-9 illustrate a preferred exemplary apparatus 100 for forming a decorative pattern on an outer surface of a roller cover having a hollow cylindrical core and a liquid applying medium circumferentially extending about the core. FIGURE 6 is a top plan view of apparatus 100, FIGURE-7 is a right side elevational view of apparatus 100, FIGURE 8 is a left side elevational view of apparatus 100 and FIGURE 9 is a front side elevational view of apparatus 100. Apparatus 100 generally includes base 104, die 106, heating elements 108, heat sensor 110, translational support system 112, rotational support system 114, ejection system 116, and controller 118. Base 104 comprises a rigid supporting structure to which die 106, translational support system 112, ejection system 116, and control 118 are mounted and supported as a single unit. Base 104 may be omitted or may be replaced with multiple structures for supporting the components of apparatus 100.

Die 106, heating elements 108, and heat sensor 110 are substantially identical to die 18, heater elements 20, and heat sensor 22, respectively, as illustrated and described with respect to FIGURES 2-4. Die 106 is stationarily mounted to base 104 adjacent to and alongside translational support system 112. Heating elements 108 and heat sensor 110 are electronically coupled to controller 118. As with die 18, die 106 includes elevated portions 26 and sunken portions 28. Elevated portions 26 are heated by heater elements 108. The temperature of elevated portions 26 is sensed by heat sensor 110. Heat sensor 110 generates temperature signals representing the sensed temperature of elevated portions 26. The temperature signals are transmitted to controller 18 which generates a control signal to control heating elements 108 based upon the temperature signals.

Translational support system 112 carries rotational support system 114 across die 106 in the direction indicated by arrows 120 as rotational support system 114 supports and rotates a roller cover 122 about axis 124. As translational support system 112 and rotational support system 114 translate and rotate roller cover 122 across die 106, elevated portions 26, which are treated by heating, form opposite corresponding depressions 126 in roller cover 122 us shown in completed form in phantom. Once depressions 126 have been formed in roller cover 122, ejection system 116 forcibly ejects the finished roller cover 122 from rotational support system 114.

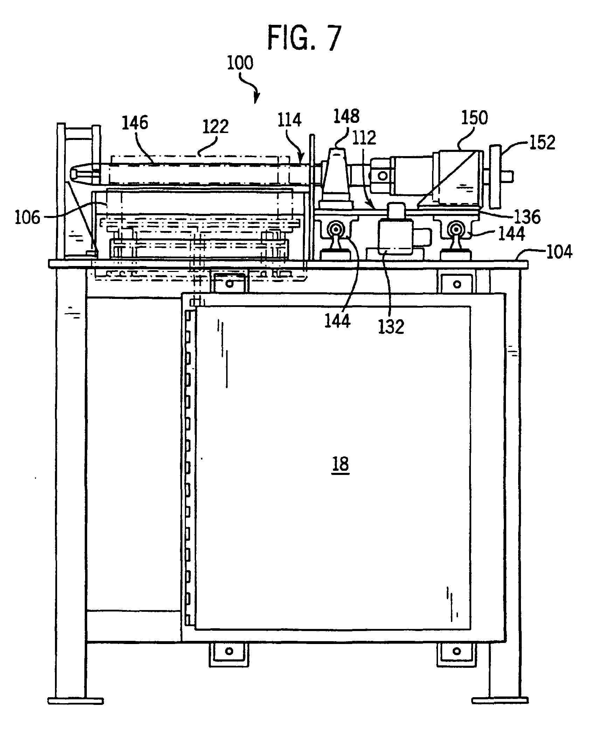

Although translational support system 112, rotational support system 114, and ejection system 116 may comprise various alternative mechanisms, the exemplary apparatus 100 including the specific embodiment of translational support system 112, rotational support system 114, and ejection system 116 have been found to be extremely reliable and capable of efficiently producing roller covers having decorative patterns. Translational support system 112 generally includes carriage 130 and linear actuator 132. Carriage 130 comprises a supporting structure such as a platform 136 which is movably coupled to base 104 along die 106. An exemplary embodiment carriage 130, includes a platform 136 slidably coupled to base 104 by tracks 138, 140, and 142. Platform 136 comprises a generally flat panel configured to support components of rotational support system 114. As best shown by FIGURE 7, platform 136 includes pillow bearings 144 which slidably receive tracks 138, 140, and 142 to movably couple carriage 130 to base 104. Platform 136 is moved along tracks 138, 140, and 142 by linear actuator 132.

Linear actuator 132 is supported by base 104 and linearly moves or translates platform 136 relative to die 106 along dies 138, 140, and 142. Linear actuator preferably comprises the conventionally known servo motor. The linear actuator includes a sensing device sensing the linear velocity of platform 136 for generating translational velocity signals which are transmitted to controller 118. Linear actuator 132 also includes a sensing device for sensing the location of platform 136 along tracks 138, 140, and 142. Linear actuator 132 generates a position or location signal which is also transmitted to controller 118. Alternatively, linear actuator 132 may comprise other well-known linear actuating devices such as hydraulically or pneumatically controlled piston-cylinder assemblies and the like. With such alternative devices, apparatus 100 includes separate translational velocity and position sensors configured to generate translational velocity signals and position signals, respectively. Linear actuator 132 moves platform 136 and rotational support 114 across die 106.

Rotational support system 114 is adapted to support roller cover 122 above and in contact with elevated portions 26 of die 106 as translational support system 112 moves the carried roller cover 122 towards ejection system 116. Rotational support system 114 additionally rotates roller cover 122. In the exemplary embodiment illustrated, rotational support system 114 includes mandrel 146, bearings support 148, and rotary actuator 150. Mandrel 146 is a generally elongate rod or tubular member configured to be received within the hollow interior of roller cover 122. Mandrel 146 frictionally engages the inner core of roller cover 122 such that roller cover 122 rotates with the rotation of mandrel 146, Mandrel 146 is rotatably supported by bearing supports 148 which are secured to platform 136 and carriage 130. Mandrel 146 is coupled to rotary actuator 150 by a belt and pulley system 152. Alternatively, mandrel 146 may be coupled to rotary actuator 150 by a chain and sprocket system or by a gear train.

Rotary actuator 150 rotatably drives mandrel 146 about axis 124 to correspondingly rotate roller cover 122 also about axis 124 as mandrel 146 is translated across die 106 by system 112. Rotary actuator 150 is carried by platform 136 of carriage 130 and preferably comprises a conventionally known servo motor. Rotary actuator 150 includes a sensing device which senses the rotational velocity of mandrel 146 and roller cover 122. The sensing device is configured to generate rotational velocity signal which is transmitted to controller 118. As will be appreciated, various other rotary actuators including conventional motors having gear reduction units or other hydraulic, pneumatic or mechanical devices may be employed. With such devices, it may be necessary to provide apparatus 100 with an independent velocity sensor for sensing the rotational velocity of mandrel 146 and roller cover 122.

Although rotational support system 114 is illustrated as including an elongate mandrel 146 which extends through roller cover 122, rotational support system 114 may alternatively comprise a pair of spaced extensions which only partially extend into the opposite ends of roller cover 122 or a conventionally known clamp mechanism which clamps about at least one end of roller cover 122 to support roller cover 122 as roller cover 122 is rotated. Furthermore, in lieu of rotating both mandrel 146 and roller cover 122 together, mandrel 146 may simply serve as a spindle about which roller cover 122 is rotated by a separate rotary mechanism attached to roller cover 122.

Ejection system 116 is mounted to base 104 at an axial end of tracks 138, 140, and 142. Ejection system 116 includes ejector member 156 and actuator 158. Ejector member 156 comprises a rigid extension member slidably coupled to base 104 for movement in a direction parallel to axis 124. Ejector member 156 is configured to engage roller cover 122 as roller cover 122 is positioned about mandrel 146. As best shown by FIGURE 9, ejector member 156 includes arcuate shaped contacting surface 160 which at least partially in encircles mandrel 146 against an end of roller cover 122. As shown in FIGURE 6, ejector member 156 moves between a first position (shown in solid) in which ejector member 156 engages an axial end of roller cover 122 while roller cover 122 is on mandrel 146 to a second position (shown in phantom) in which ejector member 156 has ejected roller cover 122 off of the axial end of mandrel 146 while moving along the axial length of mandrel 146.

Actuator 116 is mounted to base 104 and is configured to move ejector member 156 between the first and second positions. In the exemplary embodiment illustrated, actuator 116 comprises a hydraulically driven linear actuator. Alternatively, actuator 116 may comprise various other electrical, pneumatic, or mechanical linear actuators linearly translating ejector member 156 between the first and second positions. Linear actuator 116 is controlled by controller 118.

Controller 118 comprises a control circuit electrically coupled to heating elements 108, heat sensor 110, linear actuator 132, the translational velocity and location sensors asociated with linear actuator 132, rotary actuator 150, the rotational velocity sensor associated with rotary actuator 150, and linear actuator 158. Controller 118 receives temperature signals from heat sensor 110 and generates a temperature control signal based upon the temperature signal for controlling heating elements 108. Controller 118 receives the linear velocity signals from the linear velocity sensor and, the location signals from the location sensor and the rotational velocity signals from the rotational velocity sensor and generates control signals based upon each of these signals. In particular, controller 118 controls the translational movement and speed of carriage 130 and mandrel 146 along tracks 138, 140, and 142. Controller 118 also controls the rotational velocity at which mandrel 146 and roller cover 122 are rotated. Controller 118 controls the actuation of linear actuator 158 to control the movement of ejector member 156. Controller 118 controls each of the components of apparatus 100 to efficiently produce decorative patterns in roller cover 122.

The amount of pressure applied against die 106 by roller cover 122 as roller cover 122 is rotated and translated across die 106, is controlled or adjusting the vertical distance separating mandrel 146 and surface 25 of elevated portions 26 of die 106. This adjustment is preferably done manually by movement of conventionally known vertical adjustment means such as threadably engaged vertical shafts. Alternatively, such adjustment may, be automatically done by actuators controlled by controller 118 and actuated so as to vertically raise or lower either die 106 or mandrel 146 relative to one another.

In operation, controller 118 controls linear actuator 132 to position carriage 130 and mandrel 146 at the location shown in FIGURE 6 on one side of die 106 opposite ejection system 116. At this loading position, mandrel 146 is generally stationary as a loading device (not shown) axially slides roller cover 122 onto mandrel 146. Once the roller cover 122 is fully positioned upon mandrel 146, the roller cover engages a conventionally shown limit switch (not shown) adjacent to mandrel 146 which causes a signal to be transmitted to controller 118 indicating that mandrel 146 is completely loaded. At this point in time, mandrel 118 initiates linear actuator 132 such that linear actuator 132 moves platform 136 and mandrel 146 to edge 164 of die 106. Prior to reaching edge 164, controller 118 initiates rotary actuator 150 such that roller cover 122 is rotated about axis 124. At the same time, controller 118 controls heating elements 108 to heat elevated portions 26 to a temperature sufficient for creating depressions 126 in the liquid applying medium of roller cover 122. Once mandrel 146 and roller cover 122 have been translated completely across die 106, controller 118 controls rotary actuator 150 to cessate the rotation of roller cover 122. Mandrel 146 and the finished roller cover 122 are moved along track 138, 140, and 142 at an accelerated rate to the unloading position shown in phantom adjacent election system 116. At this location, the translation of mandrel 146 is stopped and actuator 158 is initiated by controller 118 to move ejector member 156 to the second position so as to eject roller cover 122 from mandrel 146. Once roller cover 122 has been ejected, linear actuator 132 is once again initiated to return mandrel 146 to the loading position while actuator 158 is initiated to return ejector member 156 for the beginning of another cycle.

According to the preferred method, roller cover 122 includes a thermoplastic core which carries a fine grade of acrylic-mod acrylic twisted fibers. Die 106 is heated to within a temperature range of between about 550 degrees fahrenheit to about 560 degrees fahrenheit measured at the heat sensor and between about 515 degrees fahrenheit to about 525 degrees fahrenheit as measured at the surface of elevated portions 26. Roller cover 122 is pressed against die 106 so as to exert approximately 200 lbs. of force on die 106. Linear actuator 132 is controlled so as to traverse the length of die 106 in approximately 10 seconds. Rotary actuator 150 is controlled so as to rotate roller cover 122 at a rotational velocity such that the entire outer circumference of roller cover 122 extends adjacent to and faces die 106 as roller cover 122 is moved across die 106. However, roller cover 122 is preferably rotated at a rotational velocity such that no portion of roller 122 faces die 106 more than once as roller cover 122 is moved across die 106. In the exemplary embodiment illustrated, die 106 has a length of approximately 5.75 inches and a width of approximately 12.5 inches. Elevated portions 26 have a height of approximately 0.625 inches above the lower surfaces of depressions 28. Roller cover 122 preferably has an inner core with an outer diameter of about 1.5 inches and a length of about 12.0 inches. The liquid applying medium of roller cover 122 has a nap thickness of approximately 0.375 inches prior to the formation of the decorative pattern in it. Heating elements 108 are preferably positioned approximately 0.7 inches below the top surface 25 of elevated portions 26. Heating elements 108 each extend approximately 1.875 inches from the sides of die 106.

Controller 118 preferably comprises a conventionally known microprocessor programmed in a conventionally known manner to perform the noted operations. Alternatively, controller 118 may comprise an analog circuit or an alternative digital circuit configured or programmed in a conventionally known manner to perform the noted operations. Furthermore, although less desirable, controller 118 may be omitted for manual control or actuation of certain operations as desired.

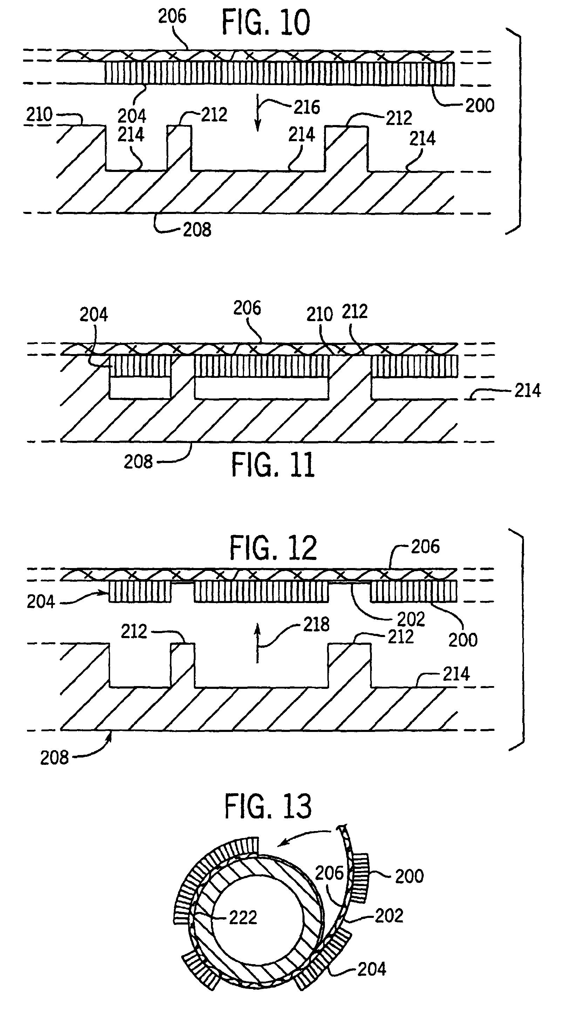

FIGURES 10-13 schematically illustrate an alternative method of forming a decorative pattern in liquid coating applicator. As shown by FIGURES 10-12, the process forms a plurality of raised portions 200 and a plurality of lowered portions 202 in liquid applying medium 204 which is attached to an elongate substrate strip 206. The process utilizes a die 208 which is substantially identical to die 18 shown in FIGURES 2-4.

Die 208 includes a surface 210 having a plurality of elevated portions 212 and a plurality of sunken portions 214. Elevated portions 212 are treated so as to form a corresponding lowered portion 202 in medium 200. Preferably, elevated portions 212 are heated by heating elements identical to those used with die 18 as best shown in FIGURES 2 and 4. As shown by FIGURE 10, substrate 206 and liquid applying medium 200 are lowered into close proximity or contact with die 210 as indicated by arrow 216. As shown by FIGURE 11, elevated portions 212 are heated so as to cause liquid applying medium 200 to shrink down to form lowered portions 202. Alternatively, elevated portions 212 may be heated or chemically treated so as to melt, burn, or substantially weaken the material or fibers of medium 200 which come into contact or close proximity with elevated portions 212. Once lowered portions 202 have been formed, substrate 206 and the remaining attached portions of medium 200 are lifted away from die 210 as indicated by arrow 218. The strips are then attached to a cylindrical core. For example, as shown by FIGURE 13, substrate 206 is helically wrapped about and bonded to cylindrical core 222. In the exemplary embodiment, both substrate 206 and core 222 are made from a thermoplastic material. At least one of substrate 206 and core 222 is heated to a sufficient temperature so as to melt the thermoplastic material wherein substrate 206 and core 222 are fused together. Alternatively, a liquid thermoplastic material may be deposited between substrate 206 and core 222 to form a bond therebetween. As would be appreciated, other alternative adhesives may be used for bonding substrate 206 to core 222.

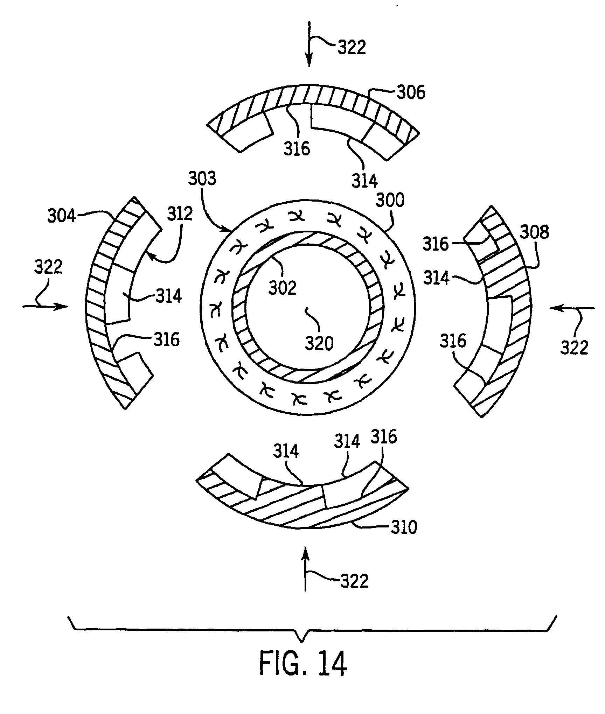

FIGURE 14 illustrates an alternative method for forming the decorative pattern in the liquid coating applicating medium 300 supported about a cylindrical core 302. According to the method illustrated in FIGURE 14, a plurality of die members 304, 306, 308, and 310 are utilized. Each die member 304, 306, 308, and 310 includes an inner circumferential surface 312 including a plurality of elevated portions 314 and a plurality of sunken portions 316. Elevated portions 314 are located so as to form a pattern on each surface 312 of each die member 304, 306, 308, and 310. Elevated portion 314 are preferably heated to a sufficient temperature so as to shrink down medium 300 to produce corresponding lowered portions or depressions in liquid applying medium 300. Elevated portions are preferably heated by electrical heating elements (not shown) extending through each die member. To form a pattern within liquid applying medium 300, each member is moved inward towards axis 320 of roller cover 303. As indicated by arrows 322, to create a sharp and distinct pattern in liquid applying medium 300, at least four die members are utilized such that elevated portions 314 are moved perpendicularly to axis 320.

Die members 304, 306, 308, and 310 are configured to form corresponding depressions or lowered portions along the entire axial length of roller cover 303. Die members 304, 306, 308, and 310 are actuated towards axis 320 so as to form a corresponding depression having a depth of at least approximately 0.375 inches such that the bottoms of the depressions will not apply liquid coating to the surface or spread pro-existing coating on the surface when roller cover 303 is pressed against the surface being decorated.

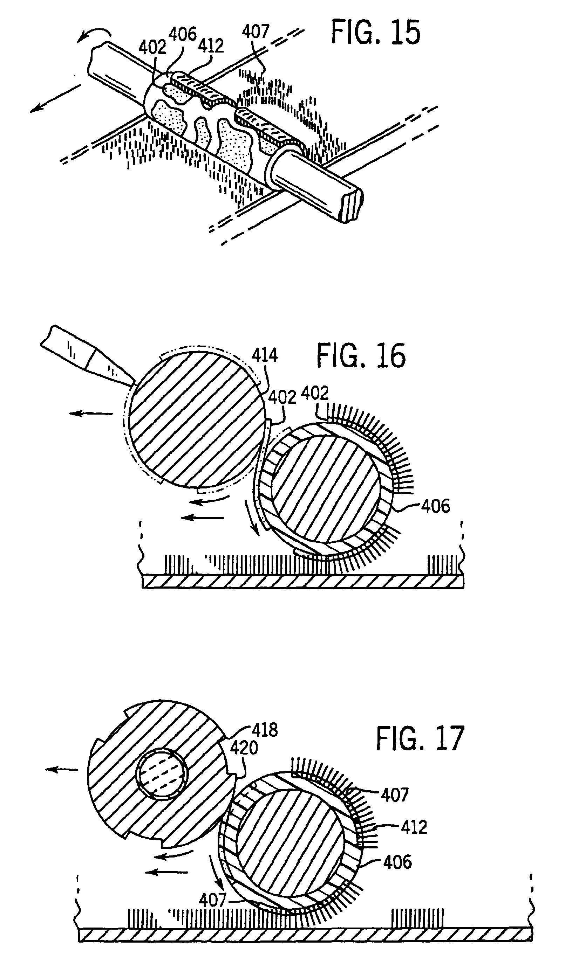

FIGURES 15-17 illustrate an alternative method of forming a decorative pattern in a liquid coating applicator. As shown by FIGURE 15, a plurality of adhesive portions 402 are formed on a substrate 406 to form a pattern. Substrate 406 is then rotated as liquid applying medium particles 407 are deposited on substrate 406. Liquid applying medium particles 407 preferably comprise conventionally known flocking. Liquid applying medium particle 407 bond only to adhesive portions 402 to form a pattern of elevated portions 412 for carrying and applying paint in a pattern to a surface. In the preferred embodiment, substrate 406 is rotated within an electrostatically charged field such that the flocking material stands up when bonding to adhesive portions 402.

FIGURES 16 and 17 illustrate alternative methods for selectively forming adhesive portions 402 along and about substrate 406. As shown by FIGURE 16, adhesive portions 402 may be formed by a roller or other surface 414 which applies or otherwise coats an adhesive material to an outer surface of substrate 406. As shown by FIGURE 17, adhesive portions 402 may also be formed by providing a substrate 406 formed from a thermoplastic material or providing substrate 406 with an outer layer of thermoplastic material. A heated roller 418 having heating elevated portions 420 is then rolled in contact with substrate 406 to selectively melt portions of the outer thermoplastic layer of substrate 406. Liquid applying medium particles are then deposited upon substrate 406 while the melted thermoplastic adhesive portions 402 are in an molten state.

According to yet another method, a plurality of differently shaped having a backing of pressure sensitive adhesive are attached at spaced locations about the circumference of a cylindrical core or across a flat substrate such as with an applicator pad. Preferably, the foam members are formed from urethane while the roller cover core is formed from polyvinylchloride. The foam members preferably have a thickness of about 0.375 inches. The foam members are positioned on a flat surface as the cylindrical core is rolled across the members to pick up the members. Once attached to the core, the foam members absorb and apply liquid coatings such as paint to the surface or wall as the roller is rolled across the surface.

## Claims

1. A method for forming a decorative pattern in a liquid coating applicator, the method comprising:
providing a surface having a plurality of elevated portions located so as to form a pattern on the surface creating the elevated portions of the surface; and
applying the elevated portions against a liquid coating applicating medium of a liquid coating applicator so as to form a corresponding image in the liquid coating applicating medium.

2. The method of claim 1, wherein the step of treating includes heating the elevated portions.

3. The method of claim 1, wherein the step of providing a surface having a plurality of elevated portions providing a surface having a plurality of elevated portions that are generally coplanar and are located so as to form a pattern on the surface.

4. The method of claim 1, wherein the step of providing a surface comprises providing a surface having a plurality of elevated portions which circumferentially extend about an axis and which are located so as to form a pattern on the surface.

5. The method of claim 1, wherein the liquid coating applicating medium of the liquid coating applicator has an outer circumferential surface, wherein the step of providing a surface having a plurality of elevated portions includes providing a plurality of members, each member having an inner circumferential surface having a plurality of elevated portions located so as to form a pattern on the inner circumferential surface and wherein the step of applying the elevated portions includes positioning each of the plurality of members about and in contact with the outer circumferential surface of the liquid coating applicating medium so as to form a corresponding image in the liquid coating applicating medium.

6. The method of claim 5, wherein the step of providing a surface includes providing at least four members.

7. The method of claim 1, wherein the liquid coating applicating medium comprises a nap of material circumferentially extending about a cylindrical core and wherein the step of applying the elevated portions comprises rotating the cylindrical core as the core and the elevated portions are linearly moved relative to one another.

8. The method of claim 1, wherein the liquid costing applicating medium comprises a thermoplastic material and wherein the step of treating the elevated portions of the surface includes heating the elevated portions to a temperature sufficient so to shrink down the thermoplastic material in contact with the elevated portions.

9. The method of claim 8, wherein the elevated portions are heated to a temperature from between about 515 degrees to about 525 degrees fahrenheit.

10. The method of claim 9, wherein the liquid coating applicating medium comprises a nap circumferentially extending about a cylindrical core.

11. A method for forming a decorative surface in a liquid coating applicator, the method comprising:
providing a substrate;
selectively forming an adhesive on a plurality of portions of the substrate to form a pattern; and
depositing a liquid applying medium particles on the substrate, wherein the liquid applying medium particles bond only to the formed adhesive.

12. The method of claim 11, wherein the step of selectively forming an adhesive includes:
selectively applying an adhesive to the substrate.

13. The method of claim 11, wherein the substrate includes a layer of thermoplastic material and wherein the step of forming an adhesive includes selectively melting a plurality of portions of the layer of thermoplastic material on the substrate.

14. The method of claim 11, wherein the step of providing a substrate includes providing a cylindrical core having an outer circumferential surface.

15. The method of claim 11, wherein the step of depositing liquid applying medium particles to the core includes creating an electrostatically charged field at least partially about the substrate; and
exposing flocking material to the substrate within the
electrostatically charged field.

16. An apparatus for forming a decorative pattern on an outer surface of a roller cover having a hollow cylindrical core and a liquid applying medium circumferentially extending about the core, the apparatus comprising:
a base;
a generally planar die coupled to the base and having a plurality of elevated portions located so as to form a pattern on the die;
means for heating the elevated portions of the die;
a carriage movably coupled to the base and along the die;
a mandrel rotatably coupled to the carriage and configured for being received within the core to support the roller cover;
a rotary actuator supported by the carriage and adapted to rotate the roller cover about an axis of the mandrel; and
a linear actuator supported by the base and coupled to the carriage, wherein the linear actuator moves the mandrel across the die as the rotary actuator rotates the roller cover.

17. The apparatus of claim 16, wherein the rotary actuator is coupled to the mandrel to rotate the mandrel.

18. The apparatus of claim 16, wherein the means for heating comprises an electrical heating element thermally coupled to the elevated portions of the die.

19. The apparatus of claim 16, including means for controlling temperature of the die.

20. The apparatus of claim 16, including:
a heat sensor thermally coupled to the die, wherein the heat sensor is configured to generate temperature signals representing the temperature of the elevated portions of the die; and
a control circuit coupled to the heat sensor, wherein the control circuit is configured to generate a control signal for controlling the means for heating based upon the temperature signal.

21. The apparatus of claim 16, including:
an ejector member coupled to the base and adapted to engage the roller cover on the mandrel, wherein the ejector member moves between a first position in which the ejector member is adapted to engage the roller cover while the roller cover is on the mandrel and a second position in which the ejector member has moved the roller cover off of the mandrel.

22. The apparatus of claim 21, including an actuator coupled to the ejector member for moving the ejector member between the first and second positions.

23. The apparatus of claim 16, including means for substantially equalizing a rotational velocity of the roller cover and a linear velocity of the carriage as the mandrel is moved across the die.

24. The apparatus of claim 16, including;
a first sensor configured to generate a first velocity signal representing the velocity of the carriage;
a second sensor configured to generate a second velocity signal representing the rotational velocity of the roller cover; and
a control circuit coupled to the first and second sensors, the control circuit is configured to generate a control signal for controlling the linear actuator and the rotary actuator based upon the first and second velocity signals.
